Europäisches Patentamt

**European Patent Office**

Office européen des brevets

(11) Numéro de publication: **0 051 013**
A1

# (12) DEMANDE DE BREVET EUROPEEN

(21) Numéro de dépôt: **81401601.0**

(22) Date de dépôt: **14.10.81**

(51) Int. Cl.³: **F 16 B 39/282**

(30) Priorité: **20.10.80 FR 8022395**

(43) Date de publication de la demande:
**05.05.82 Bulletin 82/18**

(84) Etats contractants désignés:
**AT BE CH DE GB IT LI LU NL SE**

(71) Demandeur: **SOCIETE GENERALE DE FORGEAGE DECOLLETAGE (G.F.D.)**
**Zone Industrielle**
**F-90140 Bourogne(FR)**

(72) Inventeur: **Freund, Daniel**
**6, rue Louis Soulier**
**F-42390 Villars(FR)**

(74) Mandataire: **Chameroy, Claude et al,**
**c/o Cabinet Malemont 42, avenue du Président Wilson**
**F-75116 Paris(FR)**

(54) **Elément de fixation à desserrabilité contrôlée et outillage pour sa réalisation.**

(57) Elément de fixation à filetage, tel que vis, boulon, écrou ou similaire, à desserrabilité contrôlée, du type comprenant une surface de travail (4) munie de dents en relief (5), caractérisé en ce que lesdites dents (5) sont réparties régulièrement sur la surface d'appui (4) et comportent chacune une arête saillante rectiligne (6) qui disposée tangentiellement par rapport au diamètre généré par le filetage (1).

Fig. 1

EP 0 051 013 A1

1

Elément de fixation à desserrabilité   contrôlée et outillage pour sa réalisation

La présente invention concerne un élément de fixation à filetage, tel que vis, boulon, écrou ou similaire, à desserrabilité contrôlée, du type comprenant une surface d'appui munie de dents en relief. Elle a trait également à un outillage ou poinçon par la réalisation d'un tel élément de fixation.

On connaît déjà de nombreuses formes de réalisation d'éléments de fixation munis de dents sur leur surface d'appui. Aucun d'entre-eux ne donne cependant entière satisfaction, notamment parce que leur efficacité laisse souvent à désirer.

La présente invention a donc pour but de réaliser un élément de fixation qui soit particulièrement efficace et qui présente notamment un couple de desserrage nettement supérieur au couple de serrage.

A cet effet, l'élément de fixation selon l'invention est essentiellement caractérisé en ce que lesdites dents sont réparties régulièrement sur la surface d'appui et comportent chacune une arête saillante rectiligne qui est disposée tangentiellement par rapport au diamètre généré par le filetage.

De préférence, les dents sont toutes identiques et ont en section transversale la forme d'un triangle rectangle dont l'hypoténuse constitue la pente de la dent qui est orientée dans la direction du serrage.

Ainsi, le couple de desserrage est automatiquement supérieur au couple de serrage, du fait de la différence de pente entre les deux côtés de la dent.

De plus, la section transversale de chaque dent est constante sur toute sa longueur, de manière que la ligne de contact avec l'objet à serrer soit la plus importante possible.

Une forme d'exécution de l'invention est décrite ci-après à titre d'exemple, en référence aux dessins annexés dans lesquels :

La figure 1 est une vue en plan de la surface d'appui d'un élément de fixation conforme à l'invention, se présentant sous la forme d'une vis à tête hexagonale ;

La figure 2 est une vue en coupe suivant la ligne II-II de la figure 1 ;

La figure 3 est une vue partielle en coupe suivant la ligne III-III de la figure 1 ;

La figure 4 est une vue en plan de l'outillage ou poinçon permettant de réaliser la vis représentée sur les figures 1 et 2 ; et,

La figure 5 est une vue en coupe suivant la ligne V-V de la figure 4.

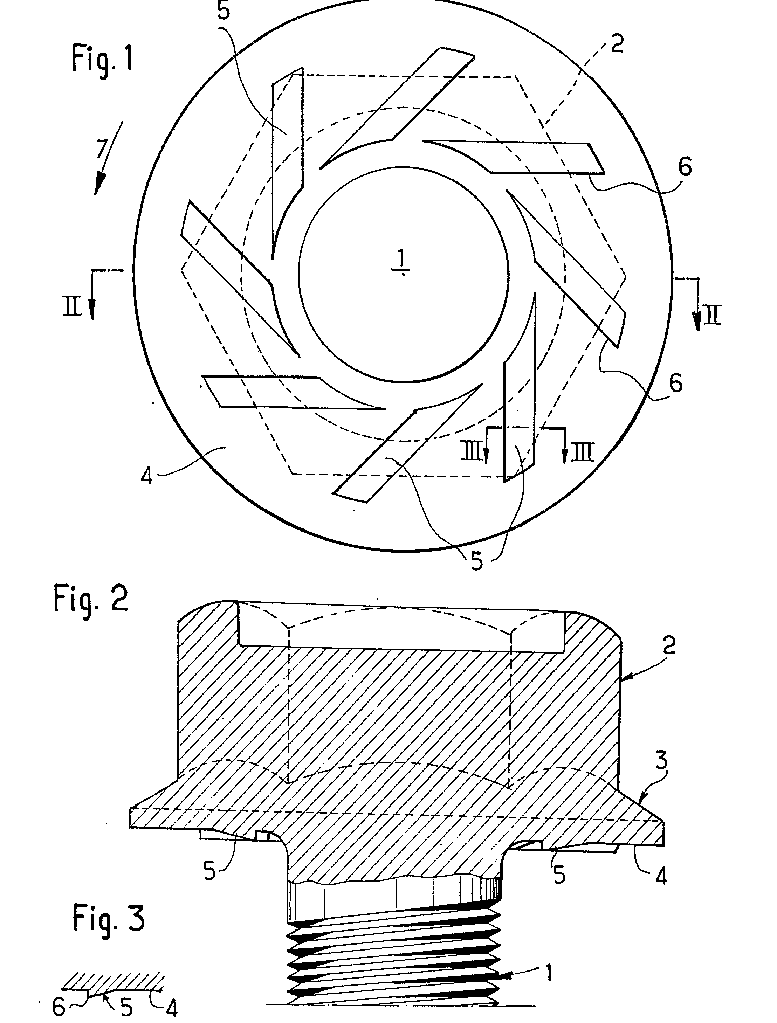

L'élément de fixation représenté sur les figures 1 et 2 se présente sous la forme d'une vis à métaux qui est essentiellement constituée d'une tige filetée 1 et d'une tête hexagonale 2 munie d'une embase 3 formant une surface de travail ou d'appui 4.

Conformément à l'invention, un certain nombre de dents en relief 5 sont régulièrement réparties sur ladite surface d'appui. Dans l'exemple particulier décrit ici, il y en a huit, mais il est bien évident qu'il pourrait y en avoir plus ou moins selon les applications envisagées. Toutes ces dents sont identiques et se présentent de la même façon. Elles sont asymétriques et possèdent une arête saillante rectiligne 6 qui est disposée tangentiellement par rapport au diamètre de la tige filetée. De plus, comme elles sont régulièrement réparties, deux dents consécutives forment entre elles un angle identique, variable naturellement en fonction du nombre de dents et qui est ici de 45° pour huit dents.

Ainsi qu'on peut le voir plus clairement sur la figure 3, chacune des dents 5 a, en coupe transversale, la forme d'un triangle rectangle. L'hypoténuse de ce triangle constitue la pente de la dent. Cette pente est placée de telle sorte qu'elle procure un freinage faible lors du vissage (le sens du vissage étant représenté par la flèche 7). L'autre côté de la dent est perpendiculaire à la face d'appui.

On notera en outre que la section de la dent est constante sur toute sa longueur. Autrement dit, les dents ont la même hauteur et la même pente sur toute leur longueur. Dans la pratique, cette hauteur sera adaptée à la nature du matériau destiné à recevoir cet élément de fixation. Il va de soi cependant que le profil des dents, tout en restant dans la même configuration, sera avantageusement adapté également en fonction de la nature dudit matériau. Il en est de même de la longueur des dents qui, au lieu de s'arrêter à l'intérieur du diamètre de l'embase 3, comme représenté sur les figures 1 et 2, pourrait tout aussi bien s'étendre jusqu'au bord extrême de ladite embase. Enfin, les caractéristiques mécaniques de l'élément, matière et traitement thermique, seront judicieusement choisies en fonction de l'utilisation.

Grâce à la forme dissymétrique des dents et au fait qu'elles ont une hauteur constante, donc une surface de contact relativement importante avec le support, le couple de desserrage est nettement supérieur au couple de serrage. L'élément de fixation selon l'invention est par conséquent d'une très grande efficacité. Les performances sont d'ailleurs encore améliorées dans le cas d'assemblages soumis à de fortes vibrations, en raison du travail mécanique qui fait pénétrer davantage les dents dans le support.

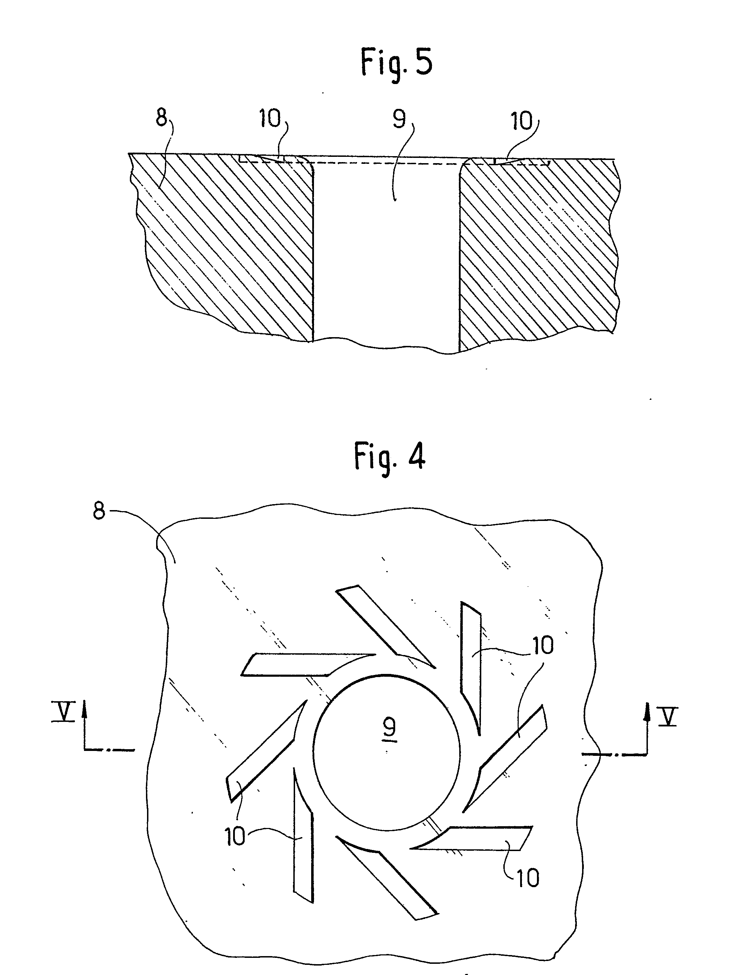

La présente invention concerne également un outillage ou poinçon permettant de réaliser, sur la surface de travail 4 de la vis, les dents 5 conformes à l'invention. Cet outillage, représenté sur les figures 4 et 5, comprend une surface de travail 8 qui est percée en son centre par un alésage 9 dont le diamètre correspond sensiblement au diamètre de la tige filetée 1. Sur la surface de travail 8 sont aménagées en creux des dents 10 dont la forme et la disposition correspondent exactement à celles des dents en relief 5 portées par la surface d'appui 4 de la vis, de manière à pouvoir réaliser toutes les dents de la vis en une seule opération.

L'invention n'est pas limitée au mode de réalisation représenté et décrit. Il va de soi en particulier qu'elle peut s'appliquer non seulement aux vis, mais également à tout autre élément de fixation du même genre, par exemple un écrou ou un boulon. De même, l'entraînement qui est constitué ici par un six pans extérieur, pourrait tout aussi bien être remplacé par un autre moyen d'entraînement, intérieur ou extérieur, l'important étant de pouvoir exercer des couples élevés en fonction des différentes utilisations possibles.

Revendications de brevet

1. Elément de fixation à filetage, tel que vis, boulon, écrou ou similaire, à desserrabilité contrôlée, du type comprenant une surface d'appui (4) munie de dents en relief (5), caractérisé en ce que lesdites dents (5) sont réparties régulièrement sur la surface d'appui (4) et comportent chacune une arête saillante rectiligne (6) qui est disposée tangentiellement par rapport au diamètre généré par le filetage 1.

2. Elément de fixation selon la revendication 1, caractérisé en ce que les dents (5) sont toutes identiques et ont en section transversale la forme d'un triangle rectangle dont l'hypoténuse constitue la pente de la dent qui est orientée dans la direction du serrage (7).

3. Elément de fixation selon la revendication 2, caractérisé en ce que la section transversale de chaque dent (5) est constante sur toute sa longueur.

4. Outillage pour la réalisation de l'élément de fixation selon l'une quelconque des revendications 1 à 3, caractérisé en ce qu'il comprend une surface de travail (8) comportant en creux des dents (10) dont la forme correspond à celle des dents en relief (5) portées par ledit élément de fixation.

Fig. 1

Fig. 2

Fig. 3

Fig. 5

Fig. 4

**0051013**

Numéro de la demande

Office européen
des brevets

**RAPPORT DE RECHERCHE EUROPEENNE**

EP 81 40 1601

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | FR - A - 2 414 657 (NEDSCHROEF MAATSCHAPPIJ N.V.)<br><br>* revendications 1 et 2; figures 2 et 3 *<br><br>-- | 1,2,3 | F 16 B 39/282 |
| | SE - A - 109 074 (J.G. LINDMARK)<br><br>* page 2, colonne de gauche et figures 4,5 *<br><br>-- | 1 | |
| | FR - A - 1 203 673 (ILLINOIS TOOL WORKS)<br><br>* pages 2,3; figures 2,4 *<br><br>-- | 1 | DOMAINES TECHNIQUES RECHERCHES (Int. Cl. 3)<br><br>F 16 B |
| | FR - A - 1 255 740 (MacLEAN FOGG LOCK NUT)<br><br>* en entier *<br><br>------ | 1 | |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 25.01.1982 | WETZEL |

OEB Form 1503.1   06.78